# EUROPÄISCHE PATENTSCHRIFT

(11) **EP 3 057 868 B1**
(45) Veröffentlichungstag und Bekanntmachung des Hinweises auf die Patenterteilung: **23.06.2021**
(21) Anmeldenummer: 14784207.4
(22) Anmeldetag: 13.10.2014
(51) Int. Cl.: B64D 11/06, B60N 2/22, B60N 2/30, B60N 2/02, B60N 2/34, B60N 2/90, B60N 2/06

(54) **FLUGZEUGSITZVORRICHTUNG**
AIRCRAFT SEAT ARRANGEMENT
DISPOSITIF FORMANT SIÈGE D'AVION

(30) Priorität: 14.10.2013 DE 102013016951
(43) Veröffentlichungstag der Anmeldung: 24.08.2016
(73) Patentinhaber: Recaro Aircraft Seating GmbH & Co. KG, 74523 Schwäbisch Hall (DE)
(72) Erfinder: JUSSLI, Zoltan, 74182 Obersulm (DE); MAHLER, Marcel, 71549 Auenwald (DE)
(74) Vertreter: Daub, Thomas
(86) Internationale Anmeldenummer: PCT/EP2014/071833
(87) Internationale Veröffentlichungsnummer: WO 2015/055551

(56) Entgegenhaltungen:
- GB-A- 2 433 433
- US-A1- 2007 262 625
- US-A1- 2012 139 300
- None

## Beschreibung

### Stand der Technik

Die Erfindung betrifft eine Flugzeugsitzvorrichtung nach dem Oberbegriff des Patentanspruchs 1.

Aus der US 2012/0139300A1, der US 2007/0262625 A1 und der GB 2 433 433 A ist bereits eine Flugzeugsitzvorrichtung mit zumindest einem Sitzboden, der zwischen einer TTL-Position und einer Liegeposition verstellbar ist, bekannt.

Die Aufgabe der Erfindung besteht insbesondere darin, eine gattungsgemäße Vorrichtung mit verbesserten Eigenschaften hinsichtlich einer Ergonomie und eines Raumbedarfs bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Flugzeugsitzvorrichtung mit zumindest einem Sitzboden, der zwischen einer TTL-Position und einer Liegeposition verstellbar ist, wobei eine Vorderkante des Sitzbodens für eine Verstellung zwischen der TTL-Position und der Liegeposition eine Verfahrwegskomponente von wenigstens 450 mm parallel zu einer Aufständerebene aufweist.

Es wird vorgeschlagen, dass sie zur Verstellung zwischen der TTL-Position und der Liegeposition sowie den dazwischen liegenden Positionen zwei Aktuatoren aufweist, sowie einen ersten, linear verschiebbaren Schlitten, welcher parallel zu der Aufständerebene ausgerichtet ist, sowie einen zweiten Schlitten aufweist, welcher in einer Verschiebeebene verschiebbar angeordnet ist, wobei der zweite Schlitten verschiebbar auf dem ersten Schlitten angebracht ist, wobei der Sitzboden auf dem zweiten Schlitten fest angeordnet ist, wobei der erste Aktuator zur Verstellung des ersten Schlittens und der zweite Aktuator zur Verstellung des zweiten Schlittens vorgesehen ist und wobei die beiden Schlitten mittels der Aktuatoren unabhängig voneinander verschiebbar sind. Unter einer "Flugzeugsitzvorrichtung" soll dabei insbesondere eine Vorrichtung verstanden werden, die zumindest einen Teil eines Flugzeugsitzes oder den gesamten Flugzeugsitz ausbildet. Unter einem "Flugzeugsitz" soll dabei insbesondere ein Sitz verstanden werden, der in einer Kabine eines Flugzeugs aufgeständert ist und der dazu vorgesehen ist, einen Sitzplatz für eine Person des Flugzeugs bereitzustellen. Unter einem "Sitzboden" soll dabei insbesondere ein Teil des Flugzeugsitzes verstanden werden, auf dem eine Person mit ihrem Gesäß Platz nehmen kann, wobei der Sitzboden dabei im Wesentlichen parallel zu der Aufständerebene, auf der der Flugzeugsitz aufgeständert ist, ausgerichtet ist. Unter einer "TTL-Position" soll dabei insbesondere eine aufrechte Position des Flugzeugsitzes verstanden werden, die aus Sicherheitsgründen, insbesondere in einer Startphase, in einer Landephase und während Turbulenzen, eingenommen werden muss. Dabei stehen in der TTL-Position eine Rückenlehne des Flugzeugsitzes und der Sitzboden im Wesentlichen senkrecht aufeinander, vorzugsweise in einem Winkel von zwischen 90 Grad und 105 Grad. Die TTL-Position bildet dabei eine erste Endposition aus, in die der Flugzeugsitz maximal verstellbar ist. Unter einer "Liegeposition" soll dabei insbesondere eine im Wesentliche waagerechte Position des Flugzeugsitzes verstanden werden, in der sowohl der Sitzboden als auch die Rückenlehne des Flugzeugsitzes im Wesentlichen parallel zu der Aufständerebene, auf der der Flugzeugsitz aufgeständert ist, ausgerichtet sind. In der Liegeposition weisen der Sitzboden und die Rückenlehne des Flugzeugsitzes jeweils eine Ausrichtung auf, wobei die Ausrichtungen im Wesentlichen parallel zueinander ausgerichtet sind. Unter einer "Vorderkante des Sitzbodens" soll dabei insbesondere eine Kante des Sitzbodens verstanden werden, die im Wesentlichen senkrecht zu einer Sitzrichtung ausgerichtet ist und die in einem montierten Zustand von einer Rückenlehne des Flugzeugsitzes abgewandt ist. Unter einer "Verfahrwegskomponente parallel zu einer Aufständerebene" soll dabei insbesondere eine Komponente eines Verfahrwegs, um den der Sitzboden verschiebbar ist, verstanden werden, die parallel zu der Aufständerebene verläuft. Unter einer "Aufständerebene" soll dabei insbesondere eine Ebene verstanden werden, auf der der Flugzeugsitz aufgeständert ist. Dabei ist die Aufständerebene vorzugsweise von einem Kabinenboden einer Flugzeugkabine ausgebildet. Unter "wenigstens 450 mm" soll dabei in diesem Zusammenhang insbesondere verstanden werden, dass die Verfahrwegskomponente der Vorderkante des Sitzbodens zumindest 450 mm, vorzugsweise zumindest 500 mm und in einer besonders vorteilhaften Ausgestaltung zumindest 515 mm beträgt. Dadurch kann eine besonders vorteilhafte Flugzeugsitzvorrichtung für einen Flugzeugsitz bereitgestellt werden, die insbesondere vorteilhaft zwischen einer TTL-Position und einer Liegeposition verstellbar ist, wobei insbesondere die Liegeposition besonders ergonomisch ausgebildet ist. Ein Flugzeugsitz mit der Flugzeugsitzvorrichtung kann dadurch insbesondere vorteilhaft ergonomisch und mit einem vorteilhaft geringen Raumbedarf ausgebildet werden.

Weiter wird vorgeschlagen, dass der Sitzboden einen Relativwinkel zu der Aufständerebene aufweist, der bei einer Verstellung zwischen der TTL-Position und der Liegeposition einen nicht-monotonen Verlauf aufweist. Unter einem "Relativwinkel des Sitzbodens zur Aufständerebene" soll dabei insbesondere ein Winkel verstanden werden, der von einer Sitzebene, die der Sitzboden ausbildet, und der Aufständerebene eingeschlossen wird. Unter einem "nicht-monotonen Verlauf" soll dabei insbesondere ein Verlauf des Relativwinkels verstanden werden, der zumindest einen Wendepunkt aufweist und insbesondere nicht lediglich gleichmäßig absinkt oder lediglich gleichmäßig ansteigt. Dadurch kann ein Verfahrweg des Sitzbodens zwischen der TTL-Position und der Liegeposition besonders vorteilhaft und ergonomisch ausgebildet werden.

Zudem wird vorgeschlagen, dass der Relativwinkel in zumindest einer Position zwischen der TTL-Position und der Liegeposition einen steileren Winkel ausbildet als in der TTL-Position. Unter einem "steileren Winkel" soll dabei insbesondere ein Winkel verstanden werden, der, weiter zu der Aufständerebene gesehen, einen größeren Wert aufweist. Dadurch kann der Sitzboden in der Position zwischen der TTL-Position und der Liegeposition besonders vorteilhaft ergonomisch eingestellt werden.

Es wird weiter vorgeschlagen, dass der Relativwinkel in zumindest einer Position zwischen der TTL-Position und der Liegeposition einen Winkel von wenigstens 10 Grad ausbildet. Unter einem "Winkel von wenigstens 10 Grad" soll dabei insbesondere ein Winkel von wenigstens 10 Grad, vorzugsweise von wenigstens 12 Grad verstanden werden. Dadurch kann die Position besonders vorteilhaft ausgebildet werden.

Weiterhin wird vorgeschlagen, dass die Flugzeugsitzvorrichtung eine mit dem Sitzboden gekoppelte Rückenlehne aufweist, die eine Höhe von mehr als 76,2 cm (30 Zoll) aufweist. Unter einer "Rückenlehne" soll dabei insbesondere ein mit dem Sitzboden des Flugzeugsitzes gekoppeltes Element des Flugzeugsitzes verstanden werden, das an einer Rückseite der Sitzbodens angebracht ist und dazu vorgesehen ist, eine Rückenstütze für eine Person, die sich auf dem Flugzeugsitz befindet, bereitzustellen. Unter einer "Höhe der Rückenlehne" soll dabei insbesondere eine Erstreckung der Rückenlehne in ihrer Haupterstreckungsrichtung, die in der TTL-Position senkrecht zu der Aufständerebene ausgerichtet ist, plus eine Länge einer ausgefahrenen Kopfstütze verstanden werden. Dabei ist die Höhe der Rückenlehne von einer Oberkante eines Polsters des Sitzbodens aus bis an eine oberste Kante der ausgefahrenen Kopfstütze gemessen. Unter einer "Kopfstütze" soll dabei insbesondere ein Element verstanden werden, das an einer dem Sitzboden abgewandten Seite der Rückenlehne angeordnet ist. Dabei ist die Kopfstütze verschiebbar an der Rückenlehne befestigt und weist einen eingefahrenen Zustand, in dem die Kopfstütze am nächsten zu der Rückenlehne ausgerichtet ist, und einen ausgefahrenen Zustand auf, in dem die Kopfstütze maximal von der Rückenlehne entfernt angeordnet ist. Dabei soll unter einer "Höhe von mehr als 76,2 cm (30 Zoll)" eine Höhe von mehr als 76,2 cm (30 Zoll), vorzugsweise von mehr als 81,28 cm (32 Zoll) und in einer besonders vorteilhaften Ausgestaltung von mehr als 85,09 cm (33,5 Zoll) verstanden werden. Dadurch kann eine besonders vorteilhafte Rückenlehne für einen besonders ergonomischen Flugzeugsitz bereitgestellt werden.

Weiter wird vorgeschlagen, dass sich eine Hüllkurve der Rückenlehne bei der Verstellung zwischen der TTL-Position und der Liegeposition um weniger als 125 mm nach hinten erstreckt. Unter einer "Hüllkurve" soll dabei insbesondere eine imaginäre Kurve verstanden werden, die von einem Punkt der Rückenlehne gebildet wird und die bei einer Verstellung zwischen der TTL-Position und der Liegeposition in den verschiedenen Stellungen der Rückenlehne jeweils am weitesten hinten gelegen ist, also einen größten Abstand parallel zu der Aufständerebene von einem anderen Element der Flugzeugsitzvorrichtung, wie beispielsweise dem Sitzboden, aufweist. Dabei liegt der Punkt der Rückenlehne in einer Mittelebene der Rückenlehne und weist einen größten Abstand von dem Sitzboden auf. Unter "um weniger als 125 mm nach hinten erstrecken" soll dabei insbesondere verstanden werden, dass sich die Hüllkurve um weniger als 125 mm, vorzugsweise um weniger als 120 mm und in einer besonders vorteilhaften Ausgestaltung um 117 mm nach hinten erstreckt. Unter "nach hinten erstrecken" soll dabei insbesondere entgegen einer Sitzrichtung erstrecken verstanden werden. Unter einer "Sitzrichtung" soll insbesondere eine Richtung verstanden werden, welche, bei einem ordnungsgemäßen Sitzen eines Passagiers, im Wesentlichen der Richtung entspricht, in welcher sich die Oberschenkel des Passagiers vom Gesäß bis zum Kniebereich erstrecken. In einer aufrechten Stellung eines Flugzeugsitzes, in welcher eine Rückenlehne senkrecht zu der Aufständerebene ausgerichtet ist, ist die Sitzrichtung parallel zu einem Kabinenboden und senkrecht zu der von der Rückenlehne gebildeten Rückenlehnenfläche ausgerichtet. Wird die Flugzeugsitzvorrichtung für einen Flugzeugsitz verwendet, entspricht die Sitzrichtung typischerweise der Flugrichtung, wobei die Sitzrichtung dabei auch um einen Winkel von bis zu 20 Grad zu der Flugrichtung verkippt sein kann. Dadurch kann die Rückenlehne und dadurch der Flugzeugsitz besonders platzsparend zwischen der TTL-Position und der Liegeposition verstellt werden.

Ferner wird vorgeschlagen, dass der Sitzboden über den ersten, linear verschiebbaren Schlitten zu der Aufständerebene verschiebbar ist. Unter einem "Schlitten" soll dabei insbesondere ein Trägerelement verstanden werden, das mittels Verschiebeelementen, wie vorzugsweise Führungselementen, in einer Verschieberichtung zu einem weiteren Element verschiebbar ist. Unter "zur Aufständerebene verschiebbar" soll dabei insbesondere verstanden werden, dass der erste Schlitten relativ zu dem Kabinenboden, der die Aufständerebene ausbildet, verschiebbar ist und dabei eine Verschiebeebene ausbildet, die einen Winkel zu der Aufständerebene aufweist, der sich von Null unterscheidet, so dass der erste Schlitten also zu der Aufständerebene geneigt verschiebbar ist, oder der gleich Null ist, so dass der erste Schlitten also parallel zu der Aufständerebene verschiebbar ist. Dadurch kann eine Verstellung des Flugzeugsitzes und insbesondere des Sitzbodens besonders einfach erfolgen.

Unter "parallel zu der Aufständerebene ausgerichtet" soll dabei insbesondere verstanden werden, dass der erste Schlitten parallel zu der Aufständerebene verschiebbar ist, also eine Verschiebeebene des ersten Schlittens parallel zu der Aufständerebene verläuft. Unter der Wendung, dass der "Sitzboden über den ersten Schlitten parallel zur Aufständerebene verschiebbar ist", soll dabei insbesondere verstanden werden, dass der Sitzboden durch ein Verschieben des ersten Schlittens parallel zu der Aufständerebene verschoben werden kann, es jedoch auch denkbar ist, dass eine Verschiebung des Sitzbodens durch weitere Elemente von der Verschiebung mittels des ersten Schlittens zumindest teilweise entkoppelt ist. Dadurch kann die Verstellung des Sitzbodens über den ersten Schlitten besonders vorteilhaft erfolgen.

Des Weiteren wird vorgeschlagen, dass die Flugzeugsitzvorrichtung zumindest eine Führungsvorrichtung aufweist, die zur festen Verbindung mit der Aufständerebene vorgesehen ist und über die der erste Schlitten linear verschiebbar ist. Unter einer "Führungsvorrichtung" soll dabei insbesondere eine Vorrichtung aus zumindest einem Führungselement verstanden werden, an das ein Element, wie insbesondere der erste Schlitten, gekoppelt ist, wobei das Element in einer Achse verschiebbar ist. Dabei ist das zumindest eine Führungselement der Führungsvorrichtung vorzugsweise von einem Schienenelement gebildet. Das Schienenelement ist dabei als ein Rohr ausgebildet, das vorzugsweise aus einem CFK-Material gebildet ist. Grundsätzlich ist es auch denkbar, dass das Schienenelement aus einem anderen, dem Fachmann als sinnvoll erscheinenden Material gebildet ist, wie beispielsweise aus einem Aluminium oder einem Edelstahl. Unter "zur festen Verbindung mit der Aufständerebene vorgesehen" soll insbesondere verstanden werden, dass die Führungsvorrichtung in einem montierten Zustand fest mit der Aufständerebene, also mit dem Kabinenboden, verbunden ist. Dabei ist die Führungsvorrichtung vorzugsweise über Befestigungsschienen, die in den Kabinenboden eingelassen sind, mit dem Kabinenboden fest gekoppelt. Dadurch kann der erste Schlitten besonders einfach verschiebbar auf der Aufständerebene angeordnet werden.

Darunter, dass der "zweite Schlitten auf dem ersten Schlitten angeordnet ist", soll dabei insbesondere verstanden werden, dass der zweite Schlitten über eine Führungsvorrichtung entlang einer Verschiebeachse verschiebbar auf dem ersten Schlitten angeordnet ist. Dabei ist es sowohl denkbar, dass die Verschiebeebene parallel zu der Aufständerebene ausgerichtet ist, als auch, dass die Verschiebeebene einen Winkel zu der Aufständerebene aufweist. Unter der Wendung, dass der "Sitzboden fest auf dem zweiten Schlitten angeordnet ist", soll dabei insbesondere verstanden werden, dass der Sitzboden verliersicher mit dem zweiten Schlitten verbunden ist, wobei damit nicht ausgeschlossen ist, dass der Sitzboden mittels einer Kinematik beweglich zu dem zweiten Schlitten angeordnet ist. Schlitten hat Dehachse zur Verbindung mit dem Sitzboden. Dadurch kann der Sitzboden besonders vorteilhaft und einfach zwischen der TTL-Position und der Liegeposition verstellt werden.

Weiterhin wird vorgeschlagen, dass die Verschiebeebene des zweiten Schlittens schräg zu der Aufständerebene ausgerichtet ist. Unter einer "schräg zu der Aufständerebene ausgerichteten Verschiebeebene" soll dabei insbesondere verstanden werden, dass die Verschiebeebene des zweiten Schlittens einen Winkel mit der Aufständerebene einschließt, der sich von 0 Grad unterscheidet. Dadurch kann der zweite Schlitten für eine vorteilhafte Verstellung des Sitzbodens vorteilhaft ausgerichtet werden.

Ferner wird vorgeschlagen, dass die Rückenlehne gekoppelt mit dem Sitzboden zwischen der TTL-Position und der Liegeposition stufenlos verstellbar ist. Unter "gekoppelt" soll dabei insbesondere verstanden werden, dass der Sitzboden und die Rückenlehne vorzugsweise über eine Mechanik miteinander gekoppelt sind, wobei bei einer Bewegung des Sitzbodens die Rückenlehne mit bewegt wird. Dadurch können der Sitzboden und die Rückenlehne besonders vorteilhaft und benutzerfreundlich auf beliebige Positionen zwischen der TTL-Position und der Liegeposition verstellt werden.

Es wird weiter vorgeschlagen, dass die beiden Schlitten zur Verstellung des Sitzbodens zwischen der TTL-Position und der Liegeposition dazu vorgesehen sind, zumindest zeitweise zeitgleich verschoben zu werden. Unter "zumindest zeitweise zeitgleich" soll dabei insbesondere verstanden werden, dass die beiden Schlitten zur Verstellung zeitgleich verschiebbar sind, aber auch getrennt voneinander bewegt werden können. Dadurch kann eine Verstellung des Sitzbodens und der Rückenlehne besonders vorteilhaft und individuell erfolgen.

Ferner wird vorgeschlagen, dass die Flugzeugsitzvorrichtung ein hinter der Rückenlehne angeordnetes Shellelement aufweist, das zur Abgrenzung eines Sitzbereichs vorgesehen ist. Unter einem "Shellelement" soll dabei insbesondere ein Abtrennungselement verstanden werden, das vorzugsweise eine tragende Struktur für Bauteile eines Sitzbereichs ausbildet, wie insbesondere für Multimediageräte, und/oder Verstau- und Ablagemöglichkeiten. Unter einem "Sitzbereich" soll insbesondere ein Bereich verstanden werden, der einem Flugzeugsitz oder zwei nebeneinander angeordneten Flugzeugsitzen zugeordnet ist. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Dadurch ist der Flugzeugsitz vorteilhaft nah an dem hinteren Sitzbereich angeordnet, wodurch insbesondere eine Bestuhlung innerhalb eines Flugzeugs besonders vorteilhaft und insbesondere platzsparend ausgebildet werden kann.

Die erfindungsgemäße Flugzeugsitzvorrichtung soll hierbei nicht auf die oben beschriebene Anwendung und Ausführungsform beschränkt sein. Insbesondere kann die erfindungsgemäße Flugzeugsitzvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung eines Flugzeugsitzes mit einer erfindungsgemäßen Flugzeugsitzvorrichtung in einer TTL-Position,
- Fig. 2: eine schematische Darstellung des Flugzeugsitzes mit der Flugzeugsitzvorrichtung in einer Position zwischen der TTL-Position und einer Liegeposition,
- Fig. 3: eine schematische Darstellung des Flugzeugsitzes mit der erfindungsgemäßen Flugzeugsitzvorrichtung in der Liegeposition,
- Fig. 4: eine schematische Darstellung des Flugzeugsitzes mit der erfindungsgemäßen Flugzeugsitzvorrichtung und
- Fig. 5: eine schematische Darstellung eines ersten, linear verschiebbaren Schlittens der Flugzeugsitzvorrichtung.

### Beschreibung des Ausführungsbeispiels

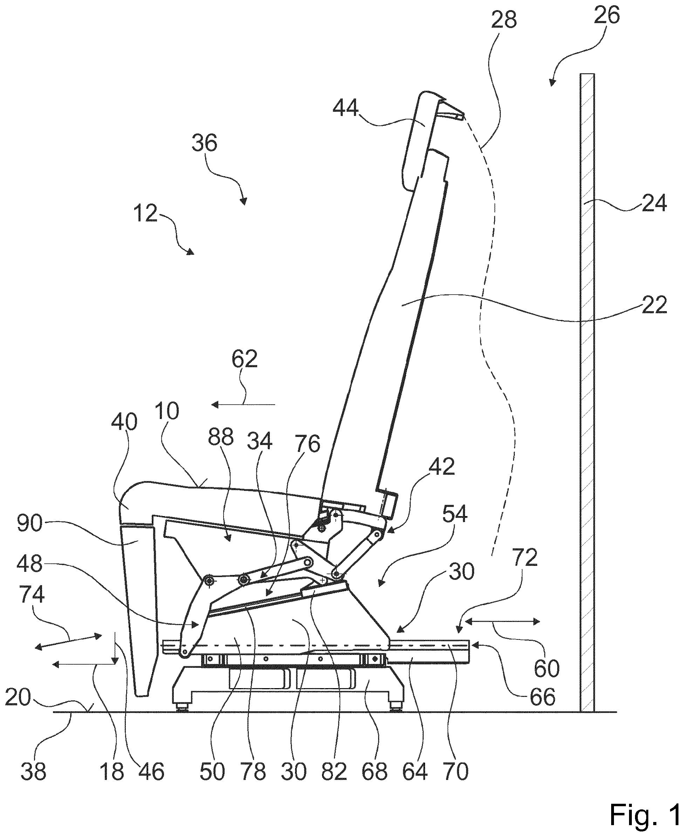

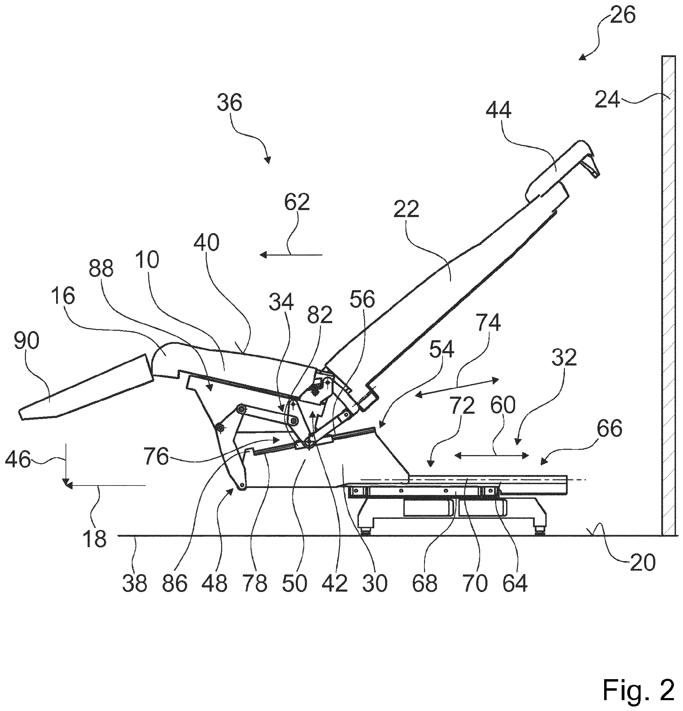

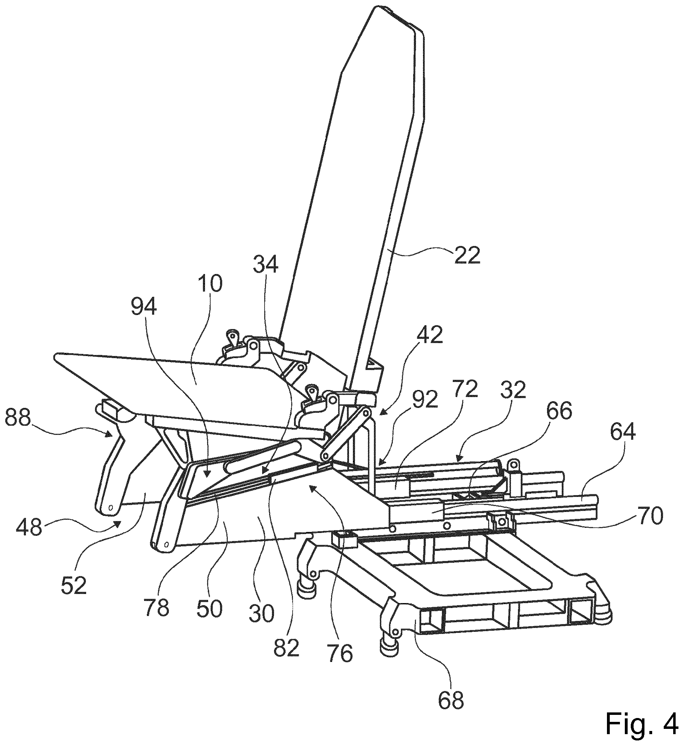

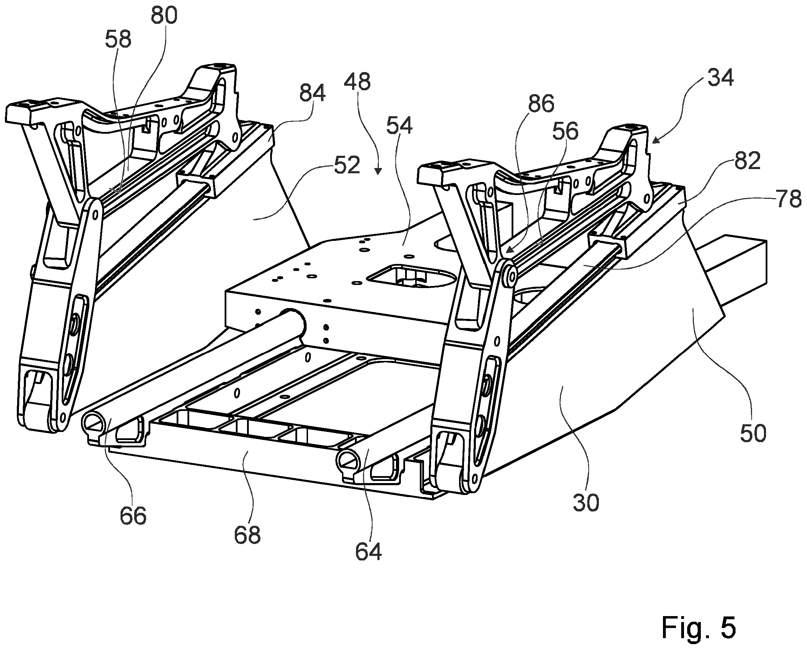

Die Figuren 1 bis 5 zeigen eine erfindungsgemäße Flugzeugsitzvorrichtung. Die Flugzeugsitzvorrichtung ist Teil eines Flugzeugsitzes 36. Grundsätzlich ist auch denkbar, dass die Flugzeugsitzvorrichtung als der gesamte Flugzeugsitz 36 ausgebildet ist. Der Flugzeugsitz 36 ist Teil eines nicht näher dargestellten Flugzeugs 36 und in einem montierten Zustand in einer Flugzeugkabine des Flugzeugs 36 angeordnet. Die Flugzeugkabine weist einen Kabinenboden 38 auf. Der Kabinenboden 38 des Flugzeugs bildet dabei eine Aufständerebene 20 aus, auf der der Flugzeugsitz 36 aufgeständert ist. Der Kabinenboden 38 weist dabei nicht näher dargestellte Befestigungselemente auf, über die der Flugzeugsitz 36 und auch weitere Flugzeugsitze 36, die äquivalent zu dem im Folgenden beschriebenen Flugzeugsitz 36 ausgebildet sein können, befestigt werden können. Die Befestigungselemente sind dabei als Befestigungsschienen ausgebildet. Dabei ist es auch denkbar, dass die Befestigungselemente als andere, dem Fachmann als sinnvoll erscheinende Befestigungselemente ausgebildet sind.

Die Flugzeugsitzvorrichtung umfasst einen Sitzboden 10. Der Sitzboden 10 stellt eine Sitzfläche 40 bereit, auf der eine Person sitzen kann. Der Sitzboden 10 weist dabei eine nicht näher beschriebene Polsterung und einen nicht näher beschriebenen Bezug auf. Der Sitzboden 10 weist eine Vorderkante 16 auf. Die Vorderkante 16 des Sitzbodens 10 bildet dabei ein vorderes Ende des Sitzbodens 10 aus. Die Flugzeugsitzvorrichtung umfasst eine Rückenlehne 22. Die Rückenlehne 22 ist mit dem Sitzboden 10 gekoppelt. Dabei ist die Rückenlehne 22 an einer hinteren Kante des Sitzbodens 10, die der Vorderkante 16 des Sitzbodens 10 abgewandt ist, angeordnet. Die Rückenlehne 22 und der Sitzboden 10 sind dabei schwenkbar zueinander angeordnet. Die Flugzeugsitzvorrichtung umfasst eine Kinematik 42, über die der Sitzboden 10 und die Rückenlehne 22 miteinander gekoppelt sind. Durch die Kinematik 42 weist der Sitzboden 10 in jeder Sitzstellung der Flugzeugsitzvorrichtung eine definierte Position und Ausrichtung zu der Rückenlehne 22 auf. Die Rückenlehne 22 ist an einem unteren Ende, das in montiertem Zustand dem Sitzboden 10 zugewandt ist, mit der Kinematik 42 gekoppelt. Die Rückenlehne 22 weist dabei eine Höhe von 86,11 cm (33,9 Zoll) auf. Die Rückenlehne 22 weist eine Kopfstütze 44 auf, die auf einer dem Sitzboden 10 abgewandten Seite der Rückenlehne 22 angeordnet ist. Dabei ist die Höhe der Rückenlehne 22 von 85,09 cm (33,5 Zoll) inklusive der ausgefahrenen Kopfstütze der Rückenlehne 22 gemessen.

Der die Flugzeugsitzvorrichtung aufweisende Flugzeugsitz 36 ist als Teil eines Sitzbereichs 26 ausgebildet, der einem Passagier in dem Flugzeug zugeordnet ist. Grundsätzlich ist es auch denkbar, dass ein Sitzbereich 26 zwei oder mehreren Passagieren zugeordnet ist und ein Sitzbereich 26 dementsprechend zwei oder mehr Flugzeugsitze 36 aufweist, die die Flugzeugsitzvorrichtung umfassen. Die Flugzeugsitzvorrichtung umfasst ein Shellelement 24, das zur Abgrenzung des Sitzbereichs 26 des Flugzeugsitzes 36, der die Flugzeugsitzvorrichtung aufweist, zu einem benachbarten, insbesondere hinter dem Sitzbereich 26 angeordneten Sitzbereich vorgesehen ist. Dabei weist das Shellelement 24, insbesondere in dem Bereich unmittelbar hinter der Rückenlehne 22, keine Wölbungen nach hinten auf. Es ist dabei denkbar, dass das Shellelement 24 in Bereichen, die seitlich der Rückenlehne 22, also nicht unmittelbar hinter der Rückenlehne 22 angeordnet sind, in unterschiedliche Raumrichtungen gewölbt ist, um eine entsprechende optische Formgebung auszugestalten. Das Shellelement 24 bildet dabei eine tragende Struktur für nicht näher dargestellte Bauteile des Sitzbereichs 26 und den dahinter liegenden Sitzbereich aus. Grundsätzlich ist es aber auch denkbar, dass das Shellelement 24 lediglich zur Abgrenzung des Sitzbereichs 26 vorgesehen ist und keine Anbindungspunkte für weitere Bauteile aufweist oder Elemente, wie beispielsweise Verstaumöglichkeiten, ausbildet.

Die Flugzeugsitzvorrichtung kann zwischen einer TTL-Position 12 und einer Liegeposition 14 verstellt werden. Eine TTL-Position 12 ist als eine aufrechte Position des Flugzeugsitzes 36 ausgebildet, die insbesondere für Start- und Landevorgänge vorgesehen ist. Die TTL-Position 12 ist als eine Sicherheitsposition des Flugzeugsitzes 36 ausgebildet. Dabei kann vorzugsweise an einer zentralen Stelle des Flugzeugs von einer Flugzeugbesatzung eingesehen werden, ob die Flugzeugsitze 36 eines Flugzeugs in der TTL-Position 12 sind. In der TTL-Position 12 ist die Rückenlehne 22 senkrecht zu der Aufständerebene 20 ausgebildet. Dadurch ist die Rückenlehne 22 vorteilhaft nah an dem Shellelement 24 angeordnet und der Sitzbereich 26 kann vorteilhaft kompakt ausgebildet werden. Der Sitzboden 10 weist einen Relativwinkel zwischen 5 und 10 Grad zu der Aufständerebene 20 auf. Dabei ist eine der Rückenlehne 22 zugewandte Seite des Sitzbodens 10 der Aufständerebene 20 zugewandt. Die Liegeposition 14 ist dabei als eine Position ausgebildet, in der eine Person ausgestreckt auf dem Flugzeugsitz 36 liegen kann. In der Liegeposition 14 weist die Rückenlehne 22 einen Relativwinkel von etwa -3 Grad zu der Aufständerebene 20 auf. Ein dem Sitzboden 10 zugewandtes Ende der Rückenlehne 22 ist dabei der Aufständer-ebene 20 zugewandt. Der Sitzboden 10 ist parallel zu der Rückenlehne 22 angeordnet und weist ebenfalls einen Winkel von -3 Grad zu der Aufständerebene 20 auf. Dadurch wird in der Liegeposition 14 von der Rückenlehne 22 und dem Sitzboden 10 eine gemeinsame Liegefläche gebildet, die in einem Winkel von -3 Grad zu der Aufständerebene 20 ausgebildet ist. Die Flugzeugsitzvorrichtung, und damit der Sitzboden 10 und die Rückenlehne 22, sind zwischen der TTL-Position 12 und der Liegeposition 14 verstellbar. Dabei verfahren der Sitzboden 10 und die Rückenlehne 22 in einem definierten Verfahrweg zueinander zwischen der TTL-Position 12 und der Liegeposition 14.

Bei einer Verstellung des Sitzbodens 10 zwischen der TTL-Position 12 und der Liegeposition 14 weist die Vorderkante 16 des Sitzbodens 10 eine Verfahrwegskomponente 18 von 515 mm parallel zu der Aufständerebene 20 auf. Die Verfahrwegskomponente 18 ist dabei als ein Teil des gesamten Verfahrwegs ausgebildet, den der Sitzboden 10 während einer Verstellung zwischen der TTL-Position 12 und der Liegeposition 14 zurücklegt. Bei der Verstellung des Sitzbodens 10 zwischen der TTL-Position 12 und der Liegeposition 14 weist der Sitzbodens 10 eine Verfahrwegskomponente 46 von 110 mm senkrecht zu der Aufständerebene 20 auf. Der gesamte Verfahrweg, den der Sitzboden 10 ausbildet, ist dabei von der Verfahrwegskomponente 18, die parallel zu der Aufständerebene 20 ausgerichtet ist, und der Verfahrwegskomponente 46, die senkrecht auf der Aufständerebene 20 steht, gebildet. Dabei bewegt sich der Sitzboden 10 während der Verstellung zwischen der TTL-Position 12 und der Liegeposition 14 zumindest zeitweise lediglich in der Verfahrwegskomponente 18, die parallel zu der Aufständerebene 20 ausgerichtet ist. In einem Teilbereich bewegt sich der Sitzboden 10 während der Verstellung zwischen der TTL-Position 12 und der Liegeposition 14 sowohl in die Verfahrwegskomponente 18, die parallel zu der Aufständerebene 20 ausgerichtet ist, als auch in die Verfahrwegskomponente 46, die senkrecht auf der Aufständerebene 20 steht. Der Sitzboden 10 verfährt bei einer Verstellung von der TTL-Position 12 in die Liegeposition 14 um 515 mm parallel zu der Aufständerebene 20 nach vorne und um 110 mm nach unten. Unter "nach vorne" soll hierbei von der Rückenlehne 22 ausgehend in Richtung der Vorderkante 16 des Sitzbodens 10 verstanden werden. Unter "nach unten" soll dabei insbesondere von dem Sitzboden 10 aus gesehen in Richtung der Aufständerebene 20 verstanden werden. Bei einer Verstellung von der Liegeposition 14 in die TTL-Position 12 verfährt der Sitzboden 10 um 509 mm parallel zu der Aufständerebene 20 nach hinten. Unter "nach hinten" soll dabei insbesondere von der Vorderkante 16 des Sitzbodens 10 ausgehend in Richtung der Rückenlehne 22 verstanden werden. Unter "nach oben" soll dabei insbesondere von der Aufständerebene 20 aus gesehen in Richtung des Sitzbodens 10 verstanden werden

Der Relativwinkel, den der Sitzboden 10 zu der Aufständerebene 20 aufweist, weist zwischen der TTL-Position 12 und der Liegeposition 14 einen nicht-monotonen Verlauf auf. Der Relativwinkel, den der Sitzboden 10 zu der Aufständerebene 20 aufweist, fällt dabei von der TTL-Position 12 zu der Liegeposition 14 ungleichmäßig von dem Relativwinkel in der TTL-Position 12 auf den Relativwinkel in der Liegeposition 14 ab. Umgekehrt steigt der Relativwinkel, den der Sitzboden 10 zu der Aufständerebene 20 aufweist, von der Liegeposition 14 zu der TTL-Position 12 ungleichmäßig von dem Relativwinkel in der Liegeposition 14 auf den Relativwinkel in der TTL-Position 12 an. Dabei steigt der Relativwinkel, den der Sitzboden 10 zu der Aufständerebene 20 aufweist, bei einer Verstellung von der TTL-Position 12 zu der Liegeposition 14 zunächst an. Dadurch weist der Sitzboden 10 in einer Position zwischen der TTL-Position 12 und der Liegeposition 14 einen Relativwinkel auf, der einen steileren Winkel ausbildet als in der TTL-Position 12. Der Relativwinkel in der Position zwischen der TTL-Position 12 und der Liegeposition 14 mit dem steilsten Relativwinkel bildet einen Winkel von größer 11 Grad bezogen auf die Aufständerebene 20 aus.

Die Rückenlehne 22 bildet bei einer Verstellung zwischen der TTL-Position 12 und der Liegeposition 14 eine Hüllkurve 28 aus. Die Hüllkurve 28 stellt dabei eine imaginäre Grenze dar, die die Rückenlehne 22 während der Verstellung zwischen der TTL-Position 12 und der Liegeposition 14 in eine bestimmte Richtung, insbesondere in eine Richtung, die von der Vorderkante 16 des Sitzbodens 10 abgewandt ist, nicht überschreitet. Die Hüllkurve 28 der Rückenlehne 22 erstreckt sich bei der Verstellung zwischen der TTL-Position 12 und der Liegeposition 14 um 117 mm nach hinten. Dabei ist ein hinterster Punkt der Rückenlehne 22 während der Verstellung zwischen der TTL-Position 12 und der Liegeposition 14 lediglich 117 mm weiter hinten als ein hinterster Punkt der Rückenlehne 22 in der TTL-Position 12.

Die Flugzeugsitzvorrichtung umfasst einen ersten, linear verschiebbaren Schlitten 30. Der linear verschiebbare Schlitten 30 ist parallel zu der Aufständerebene 20 ausgerichtet. Über den Schlitten 30 ist der Sitzboden 10 parallel zu der Aufständerebene 20 verschiebbar. Da die Rückenlehne 22 mit dem Sitzboden 10 gekoppelt ist, ist diese ebenfalls mittels des Schlittens 30 parallel zu der Aufständerebene 20 verschiebbar. Der Schlitten 30 bildet einen Grundkörper 48 aus. Der Grundkörper 48 ist von zwei Seitenelementen 50, 52 gebildet, die über ein Mittelteil 54 miteinander verbunden sind. Dabei sind die Seitenelemente 50, 52 als gefräste Platten ausgebildet. In die als gefräste Platten ausgebildeten Seitenelemente 50, 52 sind zu einer Gewichtsersparung Taschen eingebracht. Die Seitenelemente 50, 52 sind jeweils mittels Schraubenverbindungen mit dem Mittelteil 54 verbunden. Grundsätzlich ist es auch denkbar, dass die Seitenelemente 50, 52 und das Mittelteil 54 mittels einer anderen, dem Fachmann als sinnvoll erscheinenden Methode miteinander verbunden sind, wie beispielsweise mittels einer Schweißverbindung, oder dass die Seitenelemente 50, 52 und das Mittelteil 54 einstückig miteinander ausgebildet sind. Die Seitenelemente 50, 52 bilden eine ebene Unterseite aus, die in einem montierten Zustand parallel zu der Aufständerebene 20 ausgebildet ist. Auf einer dem Sitzboden 10 in montiertem Zustand zugewandten Seite weisen die Seitenelemente 50, 52 jeweils eine schräge Anbindungsfläche 56, 58 auf. Die Anbindungsflächen 56, 58 sind dabei in einem montierten Zustand nach vorne hin geneigt.

Zur linearen Verschiebung des Schlittens 30 parallel zu der Aufständerebene 20 umfasst die Flugzeugsitzvorrichtung eine erste Führungsvorrichtung 32. Die Führungsvorrichtung 32 ist zur Führung des Schlittens 30 entlang einer Verschiebeachse 60, die auf der Verschiebeebene liegt, vorgesehen. Die erste Führungsvorrichtung 32 bildet dabei eine Verschiebeebene und die Verschiebeachse 60 für den ersten Schlitten 30 aus. Die Verschiebeebene ist dabei parallel zu der Aufständerebene 20 ausgerichtet. Die Verschiebeachse 60 ist dabei koaxial zu einer Sitzrichtung 62 ausgerichtet. Dabei soll unter der Sitzrichtung 62 insbesondere eine Richtung verstanden werden, welche, bei einem ordnungsgemäßen Sitzen eines Passagiers, im Wesentlichen der Richtung entspricht, in welcher sich die Oberschenkel des Passagiers vom Gesäß bis zum Kniebereich erstrecken. In einer aufrechten Stellung der Flugzeugsitzvorrichtung, also in der TTL-Position 12, in welcher die Rückenlehne 22 senkrecht zu der Aufständerebene 20 ausgerichtet ist, ist die Sitzrichtung 62 parallel zu der Aufständerebene 20 und senkrecht zu einer von der Rückenlehne 22 gebildeten Rückenlehnenfläche ausgerichtet. Dabei entspricht die Sitzrichtung 62 einer Flugrichtung, da der die Flugzeugsitzvorrichtung aufweisende Flugzeugsitz 36 parallel zur Flugrichtung ausgerichtet ist. Grundsätzlich ist auch eine Ausrichtung des die Flugzeugsitzvorrichtung aufweisenden Flugzeugsitzes 36 denkbar, die von der Flugrichtung abweicht. Die Führungsvorrichtung 32 umfasst zwei erste Schienenelemente 64, 66, die starr auf dem Kabinenboden 38, also auf der Aufständerebene 20, aufgeständert sind. Zur Befestigung der Schienenelemente 64, 66 auf dem Kabinenboden 38 weist die Flugzeugsitzvorrichtung einen Grundrahmen 68 auf, der mehrere Fittingelemente umfasst, die fest mit Führungsschienen des Kabinenbodens 38 gekoppelt sind. Der Grundrahmen 68 ist über die Fittingelemente fest und starr mit dem Kabinenboden 38 verbunden. Die zwei ersten Schienenelemente 64, 66 sind starr mit dem Grundrahmen 68 verbunden. Dabei sind die zwei ersten Schienenelemente 64, 66 beabstandet zueinander angeordnet. Ein Abstand zwischen den zwei ersten Schienenelementen 64, 66 entspricht dabei in etwa einem Abstand zwischen den beiden Seitenelementen 50, 52. Die zwei ersten Schienenelemente 64, 66 weisen jeweils Formschlusselemente auf, die zu einer gleitenden Formschlussverbindung vorgesehen sind. Die Formschlusselemente der zwei ersten Schienenelemente 64, 66 sind dabei dem Grundrahmen 68 abgewandt. Die Führungsvorrichtung 32 weist zwei zweite Schienenelemente 70, 72 auf, die korrespondierend zu den ersten Schienenelementen 64, 66 ausgebildet sind. Die zweiten Schienenelemente 70, 72 sind fest mit dem ersten Schlitten 30 verbunden. Dabei ist jeweils ein zweites Schienenelement 70, 72 auf einer nach innen gerichteten Innenseite der Seitenelemente 50, 52 des ersten Schlittens 30 angebunden. Die beiden zweiten Schienenelemente 70, 72 sind mittels einer Schraubenverbindung fest mit den Seitenelementen 50, 52 verbunden. Die zweiten Schienenelemente 70, 72 weisen jeweils ein Formschlusselement auf, das zur Kopplung mit den Formschlusselementen der ersten Schienenelemente 64, 66 vorgesehen ist. Jeweils ein zweites Schienenelement 70, 72 greift mit seinem Formschlusselement in das Formschlusselement des ihm zugeordneten ersten Schienenelements 64, 66. Dabei umschließen die Formschlusselemente der zweiten Schienenelemente 70, 72 die Formschlusselemente der ersten Schienenelemente 64, 66 und sind damit quer zu einer Erstreckungsrichtung der Schienenelemente 64, 66, 70, 72, die parallel zu der Verschiebeachse 60 ausgerichtet ist, formschlüssig mit den Formschlusselementen der ersten Schienenelemente 64, 66 verbunden. Entlang der Erstreckungsrichtung der ersten Schienenelemente 64, 66 lassen sich die Formschlusselemente der zweiten Schienenelemente 70, 72 zu den Formschlusselementen der ersten Schienenelemente 64, 66 verschieben. Dadurch ist eine Verschiebung der zweiten Schienenelemente 70, 72 auf den ersten Schienenelementen 64, 66 entlang der Erstreckungsrichtung der Schienenelemente 64, 66, 70, 72 möglich. Es ist grundsätzlich auch denkbar, dass die Formschlusselemente der ersten Schienenelemente 64, 66 in die Formschlusselemente der zweiten Schienenelemente 70, 72 eingreifen. Zur Begrenzung einer Verschiebung der Schienenelemente 64, 66, 70, 72 zueinander weist die Führungsvorrichtung 32 nicht näher dargestellte Begrenzungselemente auf. Die Begrenzungselemente beschränken einen Verfahrweg der zweiten Schienenelemente 70, 72 und der ersten Schienenelemente 64, 66 zueinander von einem Minimalpunkt und einem Maximalpunkt. Der Minimalpunkt gibt dabei die Minimalverstellung der Schienenelemente 64, 66, 70, 72 zueinander an. Der Maximalpunkt gibt eine Maximalverstellung der Schienenelemente 64, 66, 70, 72 zueinander an. In der TTL-Position 12 sind die Schienenelemente 64, 66, 70, 72 in dem Minimalpunkt zueinander. In der Liegeposition 14 stehen die Schienenelemente 64, 66, 70, 72 in dem Maximalpunkt zueinander.

Die Flugzeugsitzvorrichtung umfasst einen zweiten Schlitten 34. Der zweite Schlitten 34 ist in einer Verschiebeebene verschiebbar angeordnet. Die Verschiebeebene des zweiten Schlittens 34 unterscheidet sich dabei von der Verschiebeebene des ersten Schlittens 30.

Die Verschiebeebene des zweiten Schlittens 34 ist dabei schräg zu der Aufständerebene 20 ausgerichtet. Die Verschiebeebene des zweiten Schlittens 34 verläuft parallel zu den Anbindungsflächen 56, 58 des ersten Schlittens 30. Eine Verschiebeachse 74 des zweiten Schlittens 34 verläuft dabei in Sitzrichtung 62 und liegt auf der Verschiebeebene. Dabei verfährt der zweite Schlitten 34 bei einer Verschiebung nach vorne in Richtung der Aufständerebene 20. Der zweite Schlitten 34 ist auf dem ersten Schlitten 30 angeordnet. Dabei ist der zweite Schlitten 34 verschiebbar auf dem ersten Schlitten 30 angebracht. Zur verschiebbaren Anordnung des zweiten Schlittens 34 auf dem ersten Schlitten 30 weist die Flugzeugsitzvorrichtung eine zweite Führungsvorrichtung 76 auf. Die zweite Führungsvorrichtung 76 umfasst zwei erste Schienenelemente 78, 80. Die zwei ersten Schienenelemente 78, 80 der zweiten Führungsvorrichtung 76 sind starr mit dem ersten Schlitten 30 verbunden. Dabei ist je ein erstes Schienenelement 78, 80 der ersten Führungsvorrichtung 76 auf einer Anbindungsfläche 56, 58 eines Seitenelements 50, 52 des ersten Schlittens 30 angeordnet. Die ersten Schienenelemente 78, 80 sind mittels einer Schraubenverbindung fest mit den Seitenelementen 50, 52 des ersten Schlittens 30 verbunden. Grundsätzlich ist es auch denkbar, dass die ersten Schienenelemente 78, 80 der zweiten Führungsvorrichtung 76 mittels einer stoffschlüssigen Verbindung, beispielsweise mittels einer Schweißverbindung, fest mit den Seitenelementen 50, 52 des ersten Schlittens 30 verbunden sind oder auch, dass sie einstückig mit dem entsprechenden Seitenelement 50, 52 des ersten Schlittens 30 ausgebildet sind. Die Führungsvorrichtung 76 umfasst zwei zweite Schienenelemente 82, 84, die korrespondierend zu den ersten Schienenelementen 78, 80 der zweiten Führungsvorrichtung 76 ausgebildet sind. Die zweiten Schienenelemente 82, 84 sind formschlüssig mit den ersten Schienenelementen 78, 80 der zweiten Führungsvorrichtung 76 verbunden. Dazu weisen die ersten Schienenelemente 78, 80 und die zweiten Schienenelemente 82, 84 jeweils ein Formschlusselement auf, wobei die Formschlusselemente ineinander eingreifen. Dabei sind die Schienenelemente 78, 80, 82, 84 entlang ihrer Erstreckungsrichtung, die parallel zu der Verschiebeachse 74 ausgerichtet ist, über ihre Formschlusselemente zueinander verschiebbar. An einem vorderen Ende bildet der erste Schlitten 30 an jedem Seitenelement 50, 52 jeweils einen Anschlag 86 aus, der ein Verschieben der Schienenelemente 78, 80, 82, 84 der zweiten Führungsvorrichtung 76 nach vorne hin begrenzt. Die Anschläge 86 sind dabei als Erhebungen ausgebildet, die sich jeweils an einem vorderen Ende von den Anbindungsflächen 56, 58 aus in Richtung des Sitzbodens 10 erheben.

Auf dem zweiten Schlitten 34 ist der Sitzboden 10 fest angeordnet. Dabei weist die Flugzeugsitzvorrichtung eine Befestigungskinematik 88 auf, die den Sitzboden 10 mit dem zweiten Schlitten 34 koppelt. Dabei ist der Sitzboden 10 über die Befestigungskinematik 88, die im Folgenden nicht näher beschrieben werden soll, schwenkbar mit dem zweiten Schlitten 34 gekoppelt. Der Sitzboden 10 ist insbesondere nicht starr und unbeweglich auf dem zweiten Schlitten 34 angebracht. Die Flugzeugsitzvorrichtung umfasst dabei weiter eine Beinauflage 90, die an der Vorderkante 16 des Sitzbodens 10 schwenkbar angeordnet ist. Die Beinauflage 90 ist dabei über die Befestigungskinematik 88, mittels der der Sitzboden 10 auf dem zweiten Schlitten 34 angebracht ist, mit dem Sitzboden 10 verbunden. Dabei ist die Beinauflage 90 zwischen der TTL-Position 12 und der Liegeposition 14 verschwenkbar. In der TTL-Position 12 ist die Beinauflage 90 im Wesentlichen senkrecht zu der Aufständerebene 20 ausgerichtet. In der Liegeposition 14 bildet die Beinauflage 90 mit dem Sitzboden 10 und der Rückenlehne 22 eine Ebene aus. Dabei weist die Beinauflage 90 in der Liegeposition 14 einen Relativwinkel von -3 Grad zu der Aufständerebene 20 auf.

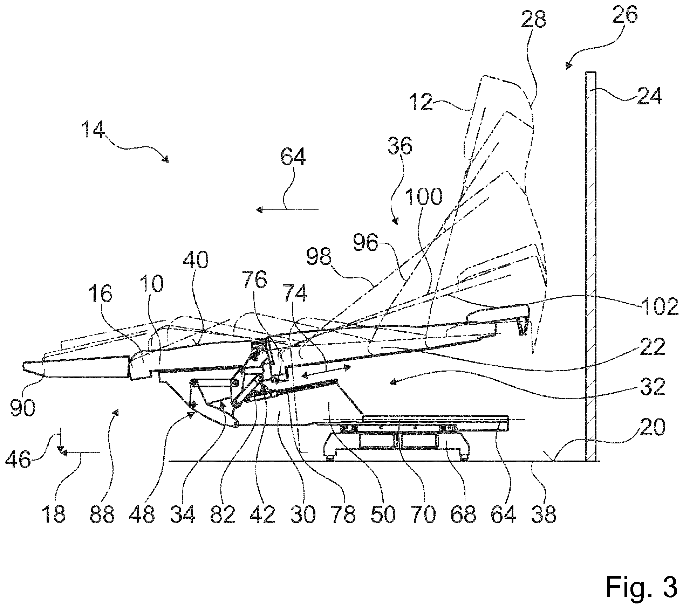

Durch den ersten Schlitten 30, der auf dem Kabinenboden 38 angeordnet ist und in der parallel zu der Aufständerebene 20 verlaufenden Verschiebeachse 60 verschiebbar ist, und den zweiten Schlitten 34, der auf dem ersten Schlitten 30 angeordnet und in einer schräg zu der Aufständerebene 20 verlaufenden Verschiebeachse 74 verschiebbar ist, ist die Flugzeugsitzvorrichtung in zwei unterschiedlichen Freiheitsgraden bewegbar. Zur Verstellung der Flugzeugsitzvorrichtung zwischen der TTL-Position 12 und der Liegeposition 14 sowie den dazwischen liegenden Positionen weist die Flugzeugsitzvorrichtung zwei Aktuatoren 92, 94 auf. Dabei ist je ein Aktuator 92, 94 einem Schlitten 30, 34 zugeordnet. Der erste Aktuator 92 ist zur Verstellung des ersten Schlittens 30 vorgesehen. Der zweite Aktuator 94 ist zur Verstellung des zweiten Schlittens 34 vorgesehen. Dabei sind die beiden Schlitten 30, 34 mittels der Aktuatoren 92, 94 unabhängig voneinander verschiebbar. Die beiden Aktuatoren 92, 94 sind dabei von einer nicht näher dargestellten Steuer- und Regeleinheit angesteuert. Die Flugzeugsitzvorrichtung weist Bedienelemente auf, die Signale an die Steuer- und Regeleinheit senden, durch die die Steuer- und Regeleinheit die Aktuatoren 92, 94 ansteuert. Dadurch kann die Flugzeugsitzvorrichtung über die Bedienelemente von einem Benutzer zwischen der TTL-Position 12 und der Liegeposition 14 verstellt werden. Die beiden Schlitten 30, 34 werden dabei bei der Verstellung zwischen der TTL-Position 12 und der Liegeposition 14 teilweise zeitgleich von den Aktuatoren 92, 94 verschoben. Grundsätzlich ist es auch denkbar, dass die Schlitten 30, 34 nacheinander verschoben werden. Eine 16g-Verriegelung der Flugzeugsitzvorrichtung erfolgt über die Aktuatoren 92, 94. Die Aktuatoren 92, 94 werden dabei bei der 16G-Verriegelung auf Zug belastet. Zu einer Veranschaulichung des Verfahrens der Flugzeugsitzvorrichtung sind in der Figur 3 mehrere Positionen 96, 98, 100, 102 der Flugzeugsitzvorrichtung gezeigt, die durch gedachte Oberflächenlinien dargestellt sind. Diese deuten an, wie die Oberflächen der Flugzeugsitzvorrichtung in den einzelnen Positionen 96, 98, 100, 102 und auch in der TTL-Position 12 ausgerichtet sind.

### Bezugszeichen

- 10: Sitzboden
- 12: TTL-Position
- 14: Liegeposition
- 16: Vorderkante
- 18: Verfahrwegskomponente
- 20: Aufständerebene
- 22: Rückenlehne
- 24: Shellelement
- 26: Sitzbereich
- 28: Hüllkurve
- 30: Schlitten
- 32: Führungsvorrichtung
- 34: Schlitten
- 36: Flugzeugsitz
- 38: Kabinenboden
- 40: Sitzfläche
- 42: Kinematik
- 44: Kopfstütze
- 46: Verfahrwegskomponente
- 48: Grundkörper
- 50: Seitenelement
- 52: Seitenelement
- 54: Mittelteil
- 56: Anbindungsfläche
- 58: Anbindungsfläche
- 60: Verschiebeachse
- 62: Sitzrichtung
- 64: Schienenelement
- 66: Schienenelement
- 68: Grundrahmen
- 70: Schienenelement
- 72: Schienenelement
- 74: Verschiebeachse
- 76: Führungsvorrichtung
- 78: Schienenelement
- 80: Schienenelement
- 82: Schienenelement
- 84: Schienenelement

- 86: Anschlag
- 88: Befestigungskinematik
- 90: Beinauflage
- 92: Aktuator
- 94: Aktuator
- 96: Position
- 98: Position
- 100: Position
- 102: Position

## Patentansprüche

1. Flugzeugsitzvorrichtung mit zumindest einem Sitzboden (10), der zwischen einer TTL-Position (12) und einer Liegeposition (14) verstellbar ist, wobei eine Vorderkante (16) des Sitzbodens (10) für eine Verstellung zwischen der TTL-Position (12) und der Liegeposition (14) eine Verfahrwegskomponente (18) von wenigstens 450 mm parallel zu einer Aufständerebene (20) aufweist, **dadurch gekennzeichnet, dass** sie zur Verstellung zwischen der TTL-Position (12) und der Liegeposition (14) sowie den dazwischen liegenden Positionen zwei Aktuatoren (92, 94) aufweist, sowie einen ersten, linear verschiebbaren Schlitten (30), welcher parallel zu der Aufständerebene (20) ausgerichtet ist, sowie einen zweiten Schlitten (34) aufweist, welcher in einer Verschiebeebene verschiebbar angeordnet ist, wobei der zweite Schlitten (34) verschiebbar auf dem ersten Schlitten (30) angebracht ist, wobei der Sitzboden (10) auf dem zweiten Schlitten (34) fest angeordnet ist, wobei der erste Aktuator (92) zur Verstellung des ersten Schlittens (30) und der zweite Aktuator (94) zur Verstellung des zweiten Schlittens (34) vorgesehen ist und wobei die beiden Schlitten (30, 34) mittels der Aktuatoren (92, 94) unabhängig voneinander verschiebbar sind.

2. Flugzeugsitzvorrichtung nach Anspruch 1, **dadurch gekennzeichnet, dass** der Sitzboden (10) einen Relativwinkel zu der Aufständerebene (20) aufweist, der bei einer Verstellung zwischen der TTL-Position (12) und der Liegeposition (14) einen nicht-monotonen Verlauf aufweist.

3. Flugzeugsitzvorrichtung nach Anspruch 2, **dadurch gekennzeichnet, dass** der Relativwinkel in zumindest einer Position zwischen der TTL-Position (12) und der Liegeposition (14) einen steileren Winkel ausbildet als in der TTL-Position (12).

4. Flugzeugsitzvorrichtung zumindest nach Anspruch 2 oder 3, **dadurch gekennzeichnet, dass** der Relativwinkel in zumindest einer Position zwischen der TTL-Position (12) und der Liegeposition (14) einen Winkel von wenigstens 10 Grad ausbildet.

5. Flugzeugsitzvorrichtung nach einem der vorhergehenden Ansprüche, **gekennzeichnet durch** eine mit dem Sitzboden (10) gekoppelte Rückenlehne (22), die eine Höhe von mehr als 76,2 cm (30 Zoll) aufweist.

6. Flugzeugsitzvorrichtung nach Anspruch 5, **dadurch gekennzeichnet, dass** sich eine Hüllkurve (28) der Rückenlehne (22) bei der Verstellung zwischen der TTL-Position (12) und der Liegeposition (14) um weniger als 125 mm nach hinten erstreckt.

7. Flugzeugsitzvorrichtung nach Anspruch 1, **gekennzeichnet durch** zumindest eine Führungsvorrichtung (32), die zur festen Verbindung mit der Aufständerebene (20) vorgesehen ist und über die der erste Schlitten (30) linear verschiebbar ist.

8. Flugzeugsitzvorrichtung nach Anspruch 1, **dadurch gekennzeichnet, dass** die Verschiebeebene des zweiten Schlittens (34) schräg zu der Aufständerebene (20) ausgerichtet ist.

9. Flugzeugsitzvorrichtung nach einem der vorhergehenden Ansprüche, **dadurch gekennzeichnet, dass** die Rückenlehne (22) gekoppelt mit dem Sitzboden (10) zwischen der TTL-Position (12) und der Liegeposition (14) stufenlos verstellbar ist.

10. Flugzeugsitzvorrichtung nach einem der vorhergehenden Ansprüche, **dadurch gekennzeichnet, dass** die beiden Schlitten (30, 34) zur Verstellung des Sitzbodens (10) zwischen der TTL-Position (12) und der Liegeposition (14) dazu vorgesehen sind, zumindest zeitweise zeitgleich verschoben zu werden.

11. Flugzeugsitz mit einer Flugzeugsitzvorrichtung nach einem der vorhergehenden Ansprüche.

## Claims

1. Aircraft seat device with at least one seat bottom (10), which is adjustable between a TTL position (12) and a lie-down position (14), wherein for an adjustment between the TTL position (12) and the lie-down position (14) a front edge (16) of the seat bottom (10) comprises a traversing path component (18) of at least 450 mm parallel to a mounting plane (20),
**characterised in that** for the adjustment between the TTL position (12) and the lie-down position (14) as well as in the positions in-between, the aircraft seat device comprises two actuators (92, 94), and comprises a first linearly displaceable slide (30), which is oriented parallel to the mounting plane (20) as well as a second slide (34), which is arranged displaceably in a displacement plane, wherein the second slide (34) is mounted on the first slide (30) in a displaceable manner, wherein the seat bottom (10) is fixedly arranged on the second slide (34), wherein the first actuator (92) is configured for an adjustment of the first slide (30) and the second actuator (94) is configured for an adjustment of the second slide (34), and wherein the two slides (30, 34) are displaceable independently from each other by the actuators (92, 94).

2. Aircraft seat device according to claim 1,
**characterised in that** the seat bottom (10) has a relative angle to the mounting plane (20), which has a non-monotone course in an adjustment between the TTL position (12) and the lie-down position (14).

3. Aircraft seat device according to claim 2,
**characterised in that** in at least one position between the TTL position (12) and the lie-down position (14) the relative angle forms a steeper angle than in the TTL position (12).

4. Aircraft seat device at least according to claim 2 or 3,
**characterised in that** in at least one position between the TTL position (12) and the lie-down position (14) the relative angle forms an angle of less than 10 degrees.

5. Aircraft seat device according to one of the preceding claims,
**characterised by** a backrest (22), which is coupled with the seat bottom (10) and has a height of more than 76.2 cm (30 inches).

6. Aircraft seat device according to claim 5,
**characterised in that** in the adjustment between the TTL position (12) and the lie-down position (14) an envelope (28) of the backrest (22) extends rearwards by less than 125 mm.

7. Aircraft seat device according to claim 1,
**characterised by** at least one guiding device (32), which is configured for a fixed connection with the mounting plane (20) and by means of which the first slide (30) is linearly displaceable.

8. Aircraft seat device according to claim 1,
**characterised in that** the displacement plane of the second slide (34) is oriented obliquely to the mounting plane (20).

9. Aircraft seat device according to one of the preceding claims,
**characterised in that** the backrest (22), coupled with the seat bottom (10), is continuously adjustable between the TTL position (12) and the lie-down position (14).

10. Aircraft seat device according to one of the preceding claims,
**characterised in that** for the adjustment of the seat bottom (10) between the TTL position (12) and the lie-down position (14), the two slides (30, 34) are configured to be at least temporarily displaced simultaneously.

11. Aircraft seat with an aircraft seat device according to one of the preceding claims.

## Revendications

1. Dispositif de siège d'avion avec au moins un fond de siège (10) qui est ajustable entre une position TTL (12) et une position de couchage (14), où pour un ajustement entre la position TTL (12) et la position de couchage (14), un bord antérieur (16) du fond de siège (10) comprend un composant de trajet de déplacement (18) d'au moins 450 mm en parallèle à un plan de montant (20), ,
**caractérisé en ce que** pour l'ajustement entre la position TTL (12) et la position de couchage (14) et les positions intermédiaires, le dispositif de siège d'avion comporte deux actionneurs (92, 94), et comporte un premier chariot (30), qui est linéairement déplaçable et est orienté en parallèle au plan de montant (20), et un deuxième chariot (34), qui est disposé de telle manière qu'il est déplaçable dans un plan de déplacement, le deuxième chariot (34) étant attaché en manière déplaçable sur le premier chariot (30), où le fond de siège (10) est fixement disposé sur le deuxième chariot (34), où le premier actionneur (92) est configuré pour l'ajustement du premier chariot (30) et le deuxième actionneur (94) est configuré pour l'ajustement du deuxième chariot (34), et où les deux chariots (30, 34) sont déplaçables indépendamment l'un de l'autre par les actionneurs (92, 94).

2. Dispositif de siège d'avion selon la revendication 1,
**caractérisé en ce que** le fond de siège (10) comprend un angle relatif par rapport au plan de montant (20), qui a un cours non-monotone dans un ajustement entre la position TTL (12) et la position de couchage (14).

3. Dispositif de siège d'avion selon la revendication 2,
**caractérisé en ce que** dans au moins une position entre la position TTL (12) et la position de couchage (14), l'angle relatif forme un angle plus escarpé que dans la position TTL (12).

4. Dispositif de siège d'avion au moins selon la revendication 2 ou 3,
**caractérisé en ce que** dans au moins une position entre la position TTL (12) et la position de couchage (14), l'angle relatif forme un angle d'au moins 10 degrés.

5. Dispositif de siège d'avion selon l'une des revendications précédentes,
**caractérisé par** un dossier (22) couplé avec le fond de siège (10), qui a une hauteur de plus de 76,2 cm (30 pouces).

6. Dispositif de siège d'avion selon la revendication 5,
**caractérisé en ce que** dans l'ajustement entre la position TTL (12) et la position de couchage (14), une enveloppe (28) du dossier (22) s'étend vers l'arrière par moins de 125 mm.

7. Dispositif de siège d'avion selon la revendication 1,
**caractérisé par** au moins un dispositif de guidage (32), qui est configuré pour un raccordement fixe avec le plan de montant (209 et par le biais duquel le premier chariot (30) est linéairement déplaçable.

8. Dispositif de siège d'avion selon la revendication 1,
**caractérisé en ce que** le plan de déplacement du deuxième chariot (34) est orienté obliquement par rapport au plan de montant (20).

9. Dispositif de siège d'avion selon l'une des revendications précédentes,
**caractérisé en ce que** le dossier (22), couplé avec le fond de siège (10), est ajustable en continu entre la position TTL (12) et la position de couchage (14).

10. Dispositif de siège d'avion selon l'une des revendications précédentes,
**caractérisé en ce que** pour l'ajustement du fond de siège (10) entre la position TTL (12) et la position de couchage (14), les deux chariots (30, 34) sont au moins temporairement configurés à être déplacés simultanément.

11. Siège d'avion avec un dispositif de siège d'avion selon l'une des revendications précédentes.
